(19) **Europäisches Patentamt**
**European Patent Office**
**Office européen des brevets**

(11) **EP 2 011 083 B1**

(12) **FASCICULE DE BREVET EUROPEEN**

(45) Date de publication et mention
de la délivrance du brevet:
**17.01.2018 Bulletin 2018/03**

(51) Int Cl.:
***G06T 11/00*** *(2006.01)*

(21) Numéro de dépôt: **07731352.6**

(22) Date de dépôt: **24.04.2007**

(86) Numéro de dépôt international:
**PCT/FR2007/000693**

(87) Numéro de publication internationale:
**WO 2007/125193 (08.11.2007 Gazette 2007/45)**

(54) **PROCEDE DE RECONSTRUCTION PAR TOMOGRAPHIE OPTIQUE EN MODE CONTINU DE LA REPARTITION DE FLUOROPHORES DANS UN MILIEU INHOMOGENE**

REKONSTRUKTIONSVERFAHREN DER VERTEILUNG VON FLUOPHOREN IN EINEM INHOMOGENEN MEDIUM MITTELS OPTISCHER TOMOGRAPHIE IN KONTINUERLICHEM MODUS

METHOD FOR RECONSTRUCTION OF THE DISTRIBUTION OF FLUOROPHORES IN A NON-HOMOGENOUS ENVIRONMENT, BY OPTICAL TOMOGRAPHY IN CONTINUOUS MODE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **25.04.2006 FR 0603677**

(43) Date de publication de la demande:
**07.01.2009 Bulletin 2009/02**

(73) Titulaire: **Commissariat à l'Énergie Atomique et aux Énergies Alternatives**
**75015 Paris (FR)**

(72) Inventeurs:
 • **DA SILVA, Anabela**
 **38000 Grenoble (FR)**
 • **KOENIG, Anne**
 **38410 Saint Martin d'Uriage (FR)**
 • **HERVE, Lionel**
 **69100 Villeurbanne (FR)**

(74) Mandataire: **GIE Innovation Competence Group**
**310, avenue Berthelot**
**69372 Lyon Cedex 08 (FR)**

(56) Documents cités:
**US-A1- 2004 262 520**

• **J. C. YE, K. J. WEBB, R. P. MILLANE, AND T. J. DOWNAR: "Modified distorted Born iterative method with an approximate Fréchet derivative for optical diffusion tomography" JOSA A, vol. 16, no. 7, juillet 1999 (1999-07), pages 1814-1826, XP002488719**
• **ARRIDGE S.R. ET LIONHEART, W.R.B.: "Nonuniqueness in diffusion-based optical tomography" OPTICS LETTERS, vol. 23, no. 11, 1998, pages 882-884, XP002419459**
• **ARRIDGE S R: "Optical tomography in medical imaging" INVERSE PROBLEMS, INSTITUTE OF PHYSICS PUBLISHING, BRISTOL, GB, no. 15, 1999, pages R41-R93, XP002404811 ISSN: 0266-5611**
• **CONG W. ET AL.: "A Born-type approximation method for bioluminescent tomography" MEDICAL PHYSICS, vol. 33, no. 3, mars 2006 (2006-03), pages 679-686, XP002419456**
• **WANG Y. ET AL.: "Imaging of Scatterng Media by Diffusion Tomography: An Iterative Perturbation Approach" SPIE 1641, 1992, pages 58-71, XP002419457**
• **B Groothoff: "Acoustic shock in call centres", Proceedings of Acoustics 2005, Busselton, Western Australia, 9 November 2005 (2005-11-09), XP055393694, Retrieved from the Internet: URL:https://www.acoustics.asn.au/conference_proceedings/AAS2005/papers/45.pdf [retrieved on 2017-07-25]**

**Description**

**Domaine technique de l'invention**

L'invention concerne un procédé de reconstruction par tomographie optique de la répartition de fluorophores dans un objet diffusant inhomogène, comportant

- l'éclairement de l'objet en lumière continue par une source lumineuse,
- la mesure de l'intensité lumineuse reçue par des détecteurs à une longueur d'onde de fluorescence et
- la résolution, en chaque point d'un maillage d'un volume englobant au moins partiellement l'objet à observer, d'une équation exprimant la relation entre l'intensité lumineuse mesurée, un paramètre, représentatif des propriétés des fluorophores, et des fonctions de transfert représentatives du transfert de l'énergie entre chacune des sources et les fluorophores et entre les fluorophores et les détecteurs.

**État de la technique**

La tomographie de fluorescence consiste à déterminer la répartition tridimensionnelle de fluorophores dans un objet comportant un milieu diffusant. L'objet est illuminé par une lumière dont la longueur d'onde $\lambda eX$ correspond à l'excitation des fluorophores. Ensuite, on mesure la lumière de fluorescence, dont la longueur d'onde $\lambda fl$ est décalée par rapport à la longueur d'onde d'excitation.

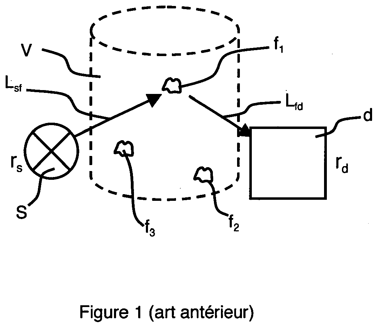

Comme illustré schématiquement sur la figure 1, une source S de lumière d'excitation ponctuelle, placée en un point $r_s$, émet une lumière d'amplitude Q à la longueur d'onde d'excitation $\lambda ex$. La lumière émise se propage dans un volume V, schématisé par un cylindre mais pouvant être de forme quelconque, d'un milieu diffusant dans lequel sont répartis des éléments fluorescents ou fluorophores f ($f_1$, $f_2$ et $f_3$ sur la figure 1) selon une distribution à déterminer. Sur la figure 1, une première onde diffusive $L_{sf}$ émise par la source S excite un élément fluorescent $f_1$, qui émet ensuite un rayonnement à la longueur d'onde de fluorescence $\lambda fl$, généralement supérieure à $\lambda ex$. L'intensité de ce rayonnement, représenté sur la figure 1 par une seconde onde diffusive $L_{fd}$, est mesurée en un point $r_d$ par un détecteur d. La distribution des éléments fluorescents f doit alors être déterminée à partir des mesures effectuées par le détecteur d. Un filtre optique (non représenté) permet de ne mesurer que les signaux reçus par le détecteur à la longueur d'onde de fluorescence $\lambda fl$. Ces mesures sont effectuées à partir d'un ensemble de positions de la source, de manière à balayer tout le volume V. Classiquement, plusieurs détecteurs sont disposés de manière à former une barre ou une matrice et les mesures effectuées par chacun des détecteurs sont prises en compte.

Les éléments fluorescents f étant répartis dans le volume V, chaque détecteur d reçoit une densité de photons $\phi^m$ mesurée, composée par toutes les secondes ondes $L_{fd}$ émises, à la longueur d'onde de fluorescence $\lambda fl$, par l'ensemble des éléments fluorescents f, disposés en des points $r_f$ du volume V. Pour des raisons de clarté, les ondes correspondant aux éléments fluorescents $f_2$ et $f_3$ ne sont pas représentées sur la figure 1.

Classiquement, l'intensité lumineuse ou densité de photons $\phi^m$ exprimée en W/m² et mesurée par le détecteur d, placé au point $r_D$, est exprimée par l'équation suivante :

$$\phi^m(\vec{r}_s,\vec{r}_d) \propto Q(\vec{r}_s) \cdot \int_V F(k_{ex},\vec{r}_s,\vec{r}_f)\beta(\vec{r}_f)F(k_{fl},\vec{r}_f,\vec{r}_d)d\vec{r}_f \qquad (1)$$

dans laquelle

- le paramètre

$$\beta(\vec{r}_f) = \eta \cdot \delta\mu(\vec{r}_f) \qquad (2)$$

dépend du rendement quantique $\eta$ de l'élément fluorescent et de l'absorption locale $\delta\mu(\vec{r}_f)$ due aux éléments fluorescents ;
- une première fonction de transfert $F(k_{ex},\vec{r}_s,\vec{r}_f)$ est représentative du transfert de l'énergie entre la source S de lumière d'excitation ponctuelle et l'élément fluorescent f situé au point $r_f$ ;
- une seconde fonction de transfert $F(k_{fl},\vec{r}_f,\vec{r}_d)$ est représentative du transfert de l'énergie entre l'élément fluorescent f situé au point $r_f$ et le détecteur d.

L'intensité $\phi^m$ mesurée est ainsi proportionnelle à l'amplitude $Q(r_s)$ de la lumière émise par la source S et à l'intégrale, sur tout le volume V, du produit des première et seconde fonctions de transfert F et du paramètre β.

Les première et seconde fonctions de transfert F sont classiquement proportionnelles à des fonctions de Green G déterminées en résolvant l'équation de diffusion suivante pour un volume V fini et pour une longueur d'onde $\lambda$ donnée :

$$\nabla^2 G(k_\lambda, \vec{r}, \vec{r_0}) - k_\lambda^2 G(k_\lambda, \vec{r}, \vec{r_0}) = -4\pi\delta(\vec{r} - \vec{r_0}) \qquad (3)$$

dans laquelle $\delta$ est la fonction de Dirac et $k_\lambda = \sqrt{\dfrac{\mu_\lambda}{D_\lambda}}$ le nombre d'onde. Dans ces expressions, $\mu_\lambda$, est le coefficient d'absorption du milieu à la longueur d'onde λ, $D_\lambda$ est le coefficient de diffusion à la longueur d'onde λ, $\vec{r}$ et $\vec{r_0}$ sont les variables spatiales de la fonction de Green et $\nabla$ est l'opérateur de dérivée spatiale gradient.

Dans les procédés connus, on suppose généralement que le milieu est homogène, c'est-à-dire que le coefficient d'absorption $\mu_\lambda$, le coefficient de diffusion $D_\lambda$ et, en conséquence, le nombre d'onde $k_\lambda$ sont des constantes pour une longueur d'onde donnée. Les paramètres $\mu_\lambda$ et $D_\lambda$ sont évalués aux longueurs d'onde $\lambda_{ex}$ et $\lambda_{fl}$. De plus, les solutions des équations de diffusion doivent satisfaire à des conditions aux limites sur la surface délimitant le volume, par exemple les conditions de Dirichlet ou les conditions de Neumann.

Les expressions ainsi trouvées pour les fonctions de Green sont ensuite introduites dans l'équation (1). Pour un calcul discret, l'espace du volume V est divisé en N volumes élémentaires selon un maillage approprié. L'intégrale de l'équation (1) est alors remplacée par une somme sur les N volumes élémentaires $dv_j$ constituant le volume V :

$$\phi(\vec{r_s}, \vec{r_d}) \propto \sum_{j=1}^{N} G(k_{ex}, \vec{r_s}, \vec{r_j})\beta(\vec{r_j})G(k_{fl}, \vec{r_j}, \vec{r_d})dv_j \qquad (4)$$

Ainsi, on associe à chaque volume élémentaire $dv_j$ une première fonction de transfert d'énergie $G(k_{ex}, \vec{r_s}, \vec{r_j})$ et une seconde fonction de transfert d'énergie $G(k_{fl}, \vec{r_j}, \vec{r_d})$.

Lorsqu'on considère une pluralité $N_S$ de sources ponctuelles S de lumière d'excitation et une pluralité $N_D$ de détecteurs d, une représentation matricielle peut être choisie :

$$[\phi]_{N_D \times N_S} = [G_{fd}]_{N_D \times N}[\beta dv]_{N \times N}[G_{sf}]_{N \times N_S}[Q]_{N_S} \qquad (5)$$

Dans cette équation, chaque colonne de $[\phi]_{N_D \times N_S}$ représente la mesure sur $N_D$ détecteurs pour une source S donnée.

Pour chaque source S et pour chaque détecteur d, une matrice de conversion *J* peut être calculée, ce qui permet de relier de manière linéaire la densité de photons $\phi^m$ mesurée au paramètre β :

$$\phi_{sd}^m = \sum_{j=1}^{N} J_{sdj}\beta_j \qquad (6)$$

L'ensemble des combinaisons source-détecteur permet de construire l'équation matricielle, qui est ensuite résolue dans un algorithme de reconstruction. Cette résolution peut être faite soit en calculant l'erreur entre les mesures expérimentales et cette équation théorique matricielle, par exemple par l'intermédiaire de la méthode de rétroprojection d'erreurs ou d'algorithmes de type ART ("Algebraic Reconstruction Technique"), soit en inversant directement la matrice *J*, par exemple par l'intermédiaire d'algorithmes de type SVD ("Singular Value Decomposition").

Dans le cas du calcul d'erreur entre la mesure expérimentale et la théorie, on utilise une distribution théorique des éléments fluorescents, qui est ajustée au fur et à mesure de manière à réduire cette erreur.

Dans le cas de l'inversion de la matrice, on obtient, dans une première étape, le paramètre β qui dépend de la distribution des éléments fluorescents par l'intermédiaire de l'absorption locale $\delta\mu(\vec{r_f})$ due aux éléments fluorescents. La connaissance du paramètre β permet ainsi de déterminer la distribution et la concentration locale des éléments fluorescents.

Or, le milieu diffusant présente généralement des inhomogénéités. Afin de tenir compte des inhomogénéités de l'objet, on pourrait théoriquement reconstruire, d'une part, la distribution volumique du coefficient de diffusion $D_\lambda$, et, d'autre part, la distribution volumique du coefficient d'absorption du milieu $\mu_\lambda$ ou du nombre d'onde $k_\lambda$, et, ensuite, remonter à la répartition de la fluorescence. En pratique, deux approches ont été utilisées jusqu'ici.

La première approche, décrite notamment dans l'article « Expérimental three-dimensional fluorescence reconstruction of diffuse média by use of a normalized Born approximation » de V. Ntziachristos et al. (Optics Letters Vol.26, No.12, 2001), utilise des signaux lumineux continus et une géométrie plane. L'objet est considéré comme homogène du point de vue des propriétés optiques d'absorption et de diffusion et les signaux de mesure de la fluorescence sont normalisés par rapport aux signaux de mesure à la longueur d'onde d'excitation. Cependant, cette correction n'est pas suffisante, car les propriétés optiques du milieu à la longueur d'onde d'excitation et à la longueur d'onde de fluorescence sont différentes et les trajets optiques suivis par les photons de fluorescence et d'excitation sont différents. Cette première approche permet néanmoins de conserver une technique de reconstruction basée sur une formulation analytique du problème.

La seconde approche, plus complexe, décrite notamment dans l'article « Fluorescence-Enhanced Optical Tomography Using Referenced Measurements of Heterogeneous Media » de R. Roy et al. (IEEE Transactions on Medical Imaging Vol.22, No.7, 2003), utilise des signaux fréquentiels et/ou temporels. Les signaux lumineux d'excitation doivent alors être modulés en intensité à une fréquence donnée ou constitués par des signaux pulsés pour reconstituer séparément la cartographie du coefficient d'absorption et la cartographie du coefficient de diffusion. La reconstruction de la répartition tridimensionnelle des fluorophores ne peut ensuite être réalisée que par des méthodes numériques et non plus par une formulation analytique du problème.

Il n'est donc actuellement pas possible de discriminer le coefficient de diffusion D et le nombre d'onde k ou le coefficient d'absorption $\mu$ en utilisant une source lumineuse fournissant des signaux continus. En conséquence, la reconstruction par tomographie optique de fluorescence d'un objet inhomogène ne peut pas prendre en compte cette inhomogénéité sans utiliser des signaux lumineux pulsés ou modulés en intensité, ce qui implique de plus de passer par une résolution numérique, complexe et coûteuse.

**Objet de l'invention**

L'invention a pour but remédier aux inconvénients des procédés connus de reconstruction par tomographie optique de la répartition de fluorophores dans un milieu inhomogène. En particulier, l'invention doit permettre d'utiliser l'éclairement de l'objet avec une lumière continue, tout en prenant correctement en compte l'inhomogénéité de l'objet, aussi bien à l'égard des propriétés d'absorption que des propriétés de diffusion.

Selon l'invention, ce but est atteint par un procédé selon les revendications annexées

**Description sommaire des dessins**

D'autres avantages et caractéristiques ressortiront plus clairement de la description qui va suivre de modes particuliers de réalisation de l'invention donnés à titre d'exemples non limitatifs et représentés aux dessins annexés, dans lesquels :

La figure 1 illustre schématiquement la propagation connue de la lumière dans un milieu diffusant.

Les figures 2 et 3 représentent, sous forme d'organigramme, un mode de réalisation particulier du procédé selon l'invention.

**Description de modes particuliers de réalisation**

Selon l'invention, il n'est pas nécessaire de déterminer séparément le coefficient d'absorption et le coefficient de diffusion du milieu, pour remonter à la répartition tridimensionnelle de fluorophores dans un milieu diffusant et absorbant inhomogène.

Pour un milieu inhomogène, l'équation de diffusion, destinée à être utilisée pour reconstruire la répartition des fluorophores, peut s'écrire sous la forme

$$\nabla^2 F(\vec{r}_s, \vec{r}) - \left( k_\lambda^2(\vec{r}) - \frac{\nabla D_\lambda(\vec{r})}{D_\lambda(\vec{r})} \cdot \nabla \right) F(\vec{r}_s, \vec{r}) = -Q(\vec{r}_s) \frac{\delta(\vec{r} - \vec{r}_s)}{D_\lambda(\vec{r})} \qquad (7)$$

dans laquelle le nombre d'onde initial $k_\lambda(\vec{r})$ dépend de la position r du point considéré du volume V et dans laquelle le coefficient de diffusion $D_\lambda$ n'est jamais nul car il s'agit d'un milieu diffusant.

Les variables $k_\lambda$ et $D_\lambda$ dépendant toutes deux de la position r, cette équation ne peut donc, a priori, être résolue que si la répartition spatiale, tridimensionnelle, de ces deux variables dans le volume V est connue. Comme indiqué précédemment, ceci n'est actuellement possible qu'avec des signaux lumineux pulsés ou modulés.

Or, dans le cas d'une source ponctuelle, la fonction de Dirac $\delta(\vec{r} - \vec{r}_s)$ est nulle sauf pour la position de la source, c'est-à-dire sauf pour $\vec{r} = \vec{r}_s$. Le terme situé à la droite de l'équation (7) peut alors s'écrire $A_s\delta(\vec{r} - \vec{r}_s)$, expression dans laquelle $A_s = -Q(\vec{r}_s)/D_\lambda(\vec{r}_s)$ est une constante.

Par ailleurs, on peut montrer que la densité de photons $\phi = F$ peut être décomposée en ondes sphériques, notamment si l'on se place loin des interfaces à l'intérieur d'un milieu diffusant. Dans ces conditions, on peut démontrer que l'opérateur $\dfrac{\nabla D_\lambda(\vec{r})}{D_\lambda(\vec{r})} \cdot \nabla$, appliqué à $F(\vec{r}_s, \vec{r})$ dans l'équation (7) peut s'écrire comme le produit d'une fonction $\alpha(\vec{r})$, ne dépendant que dès coordonnées spatiales, et de $F(\vec{r}_s, \vec{r})$. Cette fonction $\alpha(\vec{r})$ peut être considérée comme un terme d'inhomogénéité représentatif de la variation spatiale du coefficient de diffusion $D_\lambda$.

Il est alors possible d'effectuer, dans l'équation (7), un changement de variable en introduisant une nouvelle variable k'(r), telle que :

$$k'^2(\vec{r}) = k_\lambda^2(\vec{r}) - \frac{\nabla D_\lambda(\vec{r})}{D_\lambda(\vec{r})} \cdot \nabla = k_\lambda^2(\vec{r}) - \alpha(\vec{r}) \qquad (8)$$

La nouvelle variable k' dépend donc du nombre d'onde initial k et de la variation spatiale du coefficient de diffusion D. Le milieu considéré étant, par hypothèse, inhomogène, k' n'est jamais constant.

L'équation (7) peut alors s'écrire :

$$\nabla^2 F(\vec{r}_s, \ \vec{r}) - k'^2(\vec{r})F(\vec{r}_s, \ \vec{r}) = A_s\delta(\vec{r} - \vec{r}_s) \qquad (9)$$

Dans tous les cas, on peut considérer que l'approximation faite lors de la décomposition du signal en ondes sphériques peut être intégrée dans les valeurs de la variable d'atténuation k', qui est, de manière globale, représentative, en chaque point r, de l'atténuation, c'est-à-dire des propriétés de diffusion et d'absorption du milieu.

L'équation (7) ayant ainsi été ramenée à une équation, (9), à une seule inconnue, k', il devient alors possible de résoudre cette équation et de reconstruire une cartographie de la distribution de la variable d'atténuation k' dans le volume V à observer en utilisant de la lumière continue.

La reconstruction de la cartographie spatiale, tridimensionnelle, c'est-à-dire de la distribution volumique, de la variable d'atténuation k' peut être obtenue par toute méthode de reconstruction en résolvant l'équation (9) par tout moyen approprié, aussi bien par des techniques numériques classiques que par des techniques analytiques. Les techniques numériques, par exemple de type éléments finis ou de type différences finies, permettent notamment de traiter aussi bien les fortes variations de k' que les faibles variations.

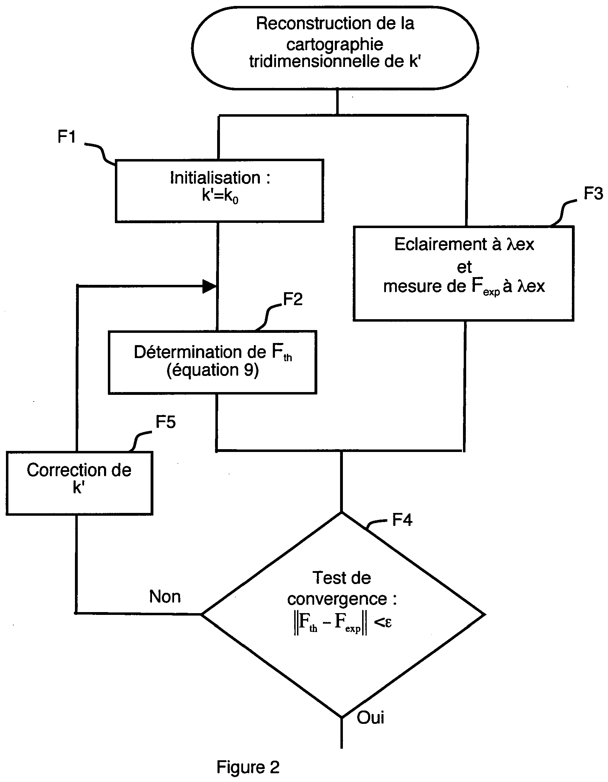

Comme représenté à la figure 2, cette reconstruction peut être obtenue par itérations successives, en utilisant un test de convergence tendant à réduire l'écart entre une densité de photons théorique $F_{th}(\vec{r}_s, \vec{r})$, déterminée en résolvant l'équation (9), et une densité de photons expérimentale $F_{exp}(\vec{r}_s, \vec{r})$, mesurée.

La détermination de la densité de photons théorique $F_{th}$ commence par une étape d'initialisation F1, dans laquelle une valeur initiale quelconque $k_0$ est affectée à la variable d'atténuation k'. Puis, dans une étape F2, la densité de photons théorique $F_{th}$ est déterminée conformément à l'équation 9, numériquement ou analytiquement.

D'autre part, la détermination expérimentale de la densité de photons théorique $F_{th}$ est réalisée, dans une étape F3, par éclairement de l'objet à observer en lumière continue et mesure de la quantité de photons reçue par les détecteurs à la même longueur d'onde, $\lambda$ex sur la figure 2. Cette détermination est effectuée de manière classique par traitement des signaux fournis par chacun des éléments détecteurs pour chaque couple source-détecteur. La détermination expérimentale est effectuée, en lumière continue, au moins à la longueur d'onde d'excitation $\lambda$ex pour réaliser la cartographie spatiale, tridimensionnelle, de la variable d'atténuation $k'_{ex}$.

Puis, dans une étape F4, le test de convergence est réalisé. Tout test de convergence connu peut être utilisé. Dans le mode particulier de réalisation illustré à la figure 2, le module $\|F_{th} - F_{exp}\|$ de la différence entre les valeurs théorique

$F_{th}$ et expérimentale $F_{exp}$, préalablement déterminées dans les étapes F2 et F3, est comparé à une valeur prédéterminée d'un paramètre d'écart ε. Si le module de leur différence n'est pas inférieur au paramètre d'écart ε (sortie Non de F4), la variable k' est corrigée (selon les méthodes classiquement utilisées pour faire converger deux grandeurs), dans une étape F5, avant de déterminer, dans une nouvelle étape F2, une nouvelle valeur de la densité de photons théorique $F_{th}$, tenant compte de l'ajustement de la variable k'. La nouvelle valeur de $F_{th}$ est ensuite comparée à $F_{exp}$ et ce processus se poursuit aussi longtemps que le module reste supérieur à ε. Lorsque le test de convergence est positif (sortie Oui de F4), c'est-à-dire lorsque le module de la différence est inférieur à ε, la valeur de k', mise en mémoire pendant l'étape F5, est considérée comme correcte.

La détermination de k' est effectuée pour chaque point r d'un maillage, régulier ou non, d'un volume englobant au moins la zone d'intérêt de l'objet à observer. On obtient ainsi, dans cette zone, une cartographie spatiale, tridimensionnelle, de la variable k' à la longueur d'onde d'excitation.

Comme indiqué ci-dessus, la détermination de $F_{th}$ dans l'étape F2, peut être réalisée numériquement ou analytiquement.

Dans l'approche numérique, par exemple de type différences finies ou éléments finis, l'équation (9) est résolue à chaque itération, c'est-à-dire lors de chaque étape F2, en utilisant la valeur initiale $k_0$ de k' lors du 1er calcul de $F_{th}$, et la valeur corrigée de k' lors des calculs ultérieurs de $F_{th}$.

En utilisant une approche perturbative ou méthode des faibles perturbations, il est possible de conserver un formalisme analytique. Le signal F est décomposé en un signal de référence connu, caractérisant un milieu homogène, dont on connaît la solution $F_0$ et un résidu perturbatif δφ, correspondant à la variation spatiale δk de la variable k' décomposée conformément à l'expression :

$$k'^2(\vec{r}) = k_0^2 + \delta k^2(\vec{r}) \qquad (10)$$

Les variations spatiales de la variable d'atténuation k' sont ainsi traitées comme une perturbation.

La densité de photons peut alors être écrite de façon approximative :

$$F(\vec{r_s}, \vec{r}) = F_0(\vec{r_s}, \vec{r}) + \delta(\vec{r_s}, \vec{r}) \qquad (11)$$

Dans cette approche perturbative, la fonction de transfert F est ainsi déterminée par l'équation de Dyson :

$$F(\vec{r_s}, \vec{r}) = F_0(\vec{r_s}, \vec{r}) + \int_V F(\vec{r_s}, \vec{r}')\delta k^2(\vec{r}')F_0(\vec{r}', \vec{r})d\vec{r}' \qquad (12)$$

La fonction de transfert F s'exprime alors directement, de manière linéaire, en fonction de la variable d'atténuation k', elle-même décomposée en $k_0$ et δk et, à chaque étape F2, la valeur de $F_{th}$ peut être obtenue directement à partir de la valeur corrigée de k' en utilisant les fonctions (10) et (12), sans nécessiter une nouvelle résolution de l'équation (9).

Dans tous les cas, la reconstruction de la cartographie de k' est réalisée par itérations successives permettant d'ajuster la variable k' pour faire converger la valeur théorique et la valeur expérimentale de F.

Le signal de fluorescence mesuré utilisé pour reconstruire ensuite, par tomographie de fluorescence, la répartition des fluorophores dans l'objet considéré dépend en fait des propriétés optiques de l'objet à la fois à la longueur d'onde d'excitation et à la longueur d'onde de fluorescence. Théoriquement, si les inhomogénéités optiques de diffusion et d'absorption de l'objet sont représentées par la variable d'atténuation k', il est nécessaire, conformément à l'équation (1), dans laquelle k serait remplacé par k', de connaître non seulement la cartographie de la variable $k'_{ex}$ à la longueur d'onde d'excitation, mais également la cartographie de la variable $k'_{fl}$ à la longueur d'onde de fluorescence.

La cartographie spatiale, tridimensionnelle, de la variable d'atténuation $k'_{fl}$ peut être obtenue de manière analogue à la cartographie spatiale, tridimensionnelle, de la variable d'atténuation $k'_{ex}$ à la longueur d'onde d'excitation, en remplaçant, dans l'étape F3 de la figure 2, l'éclairement de l'objet en lumière continue à la longueur d'onde d'excitation et la mesure à la même longueur d'onde par un éclairement en lumière continue à la longueur de d'onde de fluorescence λfl, la mesure étant également effectuée à la longueur d'onde de fluorescence .

Cependant, les longueurs d'onde d'excitation et de fluorescence sont généralement relativement proches, leur écart étant typiquement de quelques dizaines de nanomètres. On peut, en pratique, éventuellement négliger la différence de l'atténuation aux deux longueurs d'onde et considérer que $k'_{fl} = k'_{ex}$. Dans ce cas, il suffit de cartographier k' à la longueur d'onde d'excitation, comme illustré à la figure 2.

La variation des propriétés optiques en fonction de la longueur d'onde est parfois connue pour les principaux constituants du milieu. C'est notamment le cas de l'eau, du sang et de certaines particules diffusantes. Il est alors possible d'extrapoler la valeur de k'$_{fl}$ en chaque point à partir de la valeur déterminée pour k'$_{ex}$, par exemple par une régression linéaire.

La répartition des fluorophores peut ensuite être reconstruite à partir l'équation (13) ci-dessous, obtenue par modification de l'équation (1) dans laquelle le nombre d'onde k est remplacé par la variable d'atténuation k' :

$$\phi^m(\vec{r}_s, \vec{r}_d) \propto Q(\vec{r}_s) \cdot \int_V F(k'_{ex}, \vec{r}_s, \vec{r}_f)\beta(\vec{r}_f) \, F(k'_{fl}, \vec{r}_f, \vec{r}_d)d\vec{r}_f \qquad (13)$$

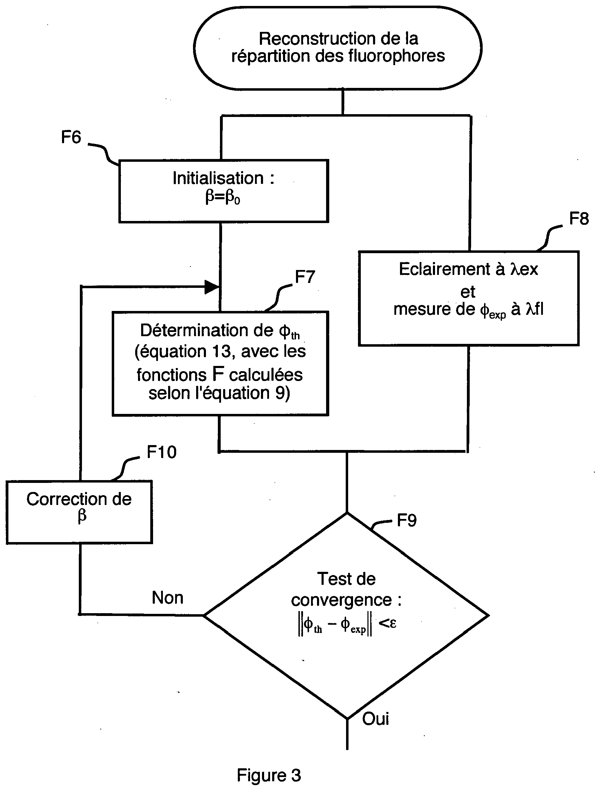

La figure 3 illustre un mode particulier de réalisation de la reconstruction de la répartition des fluorophores. De manière analogue au procédé de reconstruction de la variable d'atténuation k' selon la figure 2, la reconstruction de la répartition des fluorophores consiste à résoudre l'équation linéaire (13) par une méthode de résolution de systèmes linéaires (ART, SVD, gradients conjugués...). Ceci peut, par exemple dans la méthode des gradients conjugués, être réalisé en utilisant un test de convergence tendant à réduire l'écart entre une densité de photons théorique $\phi_{th}$, déterminée en résolvant l'équation (13), et une densité de photons expérimentale $\phi_{exp}$ mesurée.

La détermination de la densité de photons théorique $\phi_{th}$ commence par une étape d'initialisation F6, dans laquelle une valeur initiale quelconque $\beta_0$ est affectée au paramètre $\beta$. Puis, dans une étape F7, la densité de photons théorique $\phi_{th}$ est déterminée conformément à l'équation (13), numériquement ou analytiquement. Dans cette étape, les fonctions F de l'équation (13) sont déterminées à partir de l'équation (9), en utilisant les valeurs de k' déterminées lors de la reconstruction de la cartographie de k' (figure 2).

D'autre part, la détermination expérimentale de la densité de photons théorique $\phi_{th}$ est réalisée, dans une étape F8, par éclairement de l'objet à observer, en lumière continue, à la longueur d'onde d'excitation $\lambda$ex et mesure de la quantité de photons reçue, après filtrage, par les détecteurs à la longueur d'onde de fluorescence $\lambda$fl. Cette détermination est effectuée de manière classique par traitement des signaux fournis par chacun des éléments détecteurs pour chaque couple source-détecteur.

Puis, dans une étape F9, le test de convergence est réalisé. Comme précédemment, tout test de convergence connu peut être utilisé. Dans le mode particulier de réalisation illustré à la figure 3, le module $\|\phi_{th}- \phi_{exp}\|$ de la différence entre les valeurs théorique $\phi_{th}$ et expérimentale $\phi_{exp}$, préalablement déterminées dans les étapes F7 et F8, est comparée à une valeur prédéterminée d'un paramètre d'écart $\varepsilon$. Si le module de leur différence n'est pas inférieur au paramètre d'écart $\varepsilon$ (sortie Non de F9), la valeur du paramètre $\beta$ est corrigée (selon les méthodes classiquement utilisées pour faire converger deux grandeurs), dans une étape F10, avant de déterminer, dans une nouvelle étape F7, une nouvelle valeur de la densité de photons théorique $\phi_{th}$, tenant compte de l'ajustement de la valeur du paramètre $\beta$. La nouvelle valeur de $\phi_m$ est ensuite comparée à $\phi_{exp}$ et ce processus se poursuit aussi longtemps que le module de la différence reste supérieur à $\varepsilon$. Lorsque le test de convergence est positif (sortie Oui de F9), c'est-à-dire lorsque le module de la différence est inférieur à $\varepsilon$, la valeur de $\beta$, mise en mémoire pendant l'étape F10, est considérée comme correcte.

La détermination du paramètre $\beta(\vec{r}_f)$, effectuée pour chaque emplacement r du maillage du volume englobant au moins partiellement l'objet à observer, fournit classiquement les informations désirées en ce qui concerne l'emplacement et les propriétés des fluorophores.

Ainsi, le remplacement dans l'équation (1) du nombre d'onde k par une variable d'atténuation k', dont la cartographie spatiale, tridimensionnelle, est déterminée au préalable, permet de tenir compte des inhomogénéités de diffusion de l'objet, tout en utilisant une lumière continue. Un formalisme de type analytique peut alors être utilisé à la fois pour la reconstruction de la cartographie spatiale, tridimensionnelle, de la variable d'atténuation et pour la reconstruction de la répartition des fluorophores.

## Revendications

1. Procédé de reconstruction par tomographie optique de la répartition de fluorophores (f) dans un objet diffusant inhomogène, comportant :

   - l'éclairement de l'objet (1) en lumière continue par au moins une source lumineuse,
   - la mesure de l'intensité lumineuse ($\Phi^m$) reçue par au moins un détecteur à une longueur d'onde de fluorescence
   - et la résolution, en chaque point (r) d'un maillage d'un volume englobant au moins partiellement l'objet à observer, d'une équation exprimant la relation entre l'intensité lumineuse mesurée ($\Phi^m$), un paramètre ($\beta(\vec{r_f})$) représentatif des propriétés des fluorophores (f) et des première et seconde fonctions de transfert ($F(k_{ex}, \vec{r_s}, \vec{r_f})$,

$F(k_{ex}, \vec{r_s}, \vec{r_d})$ respectivement représentatives du transfert de l'énergie entre la source (S) et un fluorophore (f), et entre un fluorophore et un détecteur (d), les première et deuxième fonctions de transfert étant respectivement fonction d'un nombre d'onde $(k_{ex})$ à la longueur d'onde d'excitation $(\lambda_{ex})$, et d'un nombre d'onde $(k_{fl})$ à la longueur d'onde de fluorescence $(\lambda_{fl})$,

le procédé étant **caractérisé en ce qu'**il comporte,

- une détermination d'une cartographie tridimensionnelle d'une variable d'atténuation $(k'_{ex}(r))$, à la longueur d'onde d'excitation $(\lambda_{ex})$, représentative des inhomogénéités de diffusion et d'absorption de l'objet, la variable d'atténuation dépendant du nombre d'onde et d'une variation spatiale d'un coefficient de diffusion en chaque point du maillage;
- une détermination d'une cartographie tridimensionnelle de la variable d'atténuation $(k'_{fl}(r))$, à la longueur d'onde de fluorescence $(\lambda_{fl})$;
- la reconstruction de la répartition des fluorophores utilisant respectivement, dans lesdites première et seconde fonctions de transfert, la variable d'atténuation $(k'_{ex}(r))$ à la longueur d'onde d'excitation $(\lambda_{ex})$ et la variable d'atténuation $(k'_{fl}(r))$ à la longueur d'onde de fluorescence $(\lambda_{fl})$.

**2.** Procédé selon la revendication 1, **caractérisé en ce que** la détermination de la cartographie tridimensionnelle de la variable d'atténuation, à la longueur d'onde d'excitation, est obtenue par reconstruction de la cartographie spatiale tridimensionnelle de la première variable d'atténuation $(k'_{ex}(r))$, la reconstruction étant obtenue par l'éclairement de l'objet en lumière continue à la longueur d'onde d'excitation $(\lambda_{ex})$ et la mesure d'une densité de photons expérimentale par ledit au moins un détecteur et par résolution d'une équation de diffusion

$$\nabla F(\vec{r_s}, \vec{r}) - k'_{ex}(r) F(\vec{r_s}, \vec{r}) = A_s \delta(\vec{r} - \vec{r_s})$$

dans laquelle $A_s$ est une constante, $\vec{r}$ est la coordonnée spatiale d'un point quelconque du maillage et $\vec{r_s}$ la coordonnée spatiale de la source lumineuse (S).

**3.** Procédé selon la revendication 2, dans lequel la reconstruction est obtenue par itérations successives en utilisant un test de convergence tendant à réduire un écart entre une densité de photons théorique $(F_{th}(\vec{r_s}, \vec{r}))$ obtenue en résolvant ladite équation de diffusion et la densité de photons expérimentale mesurée $(F(\vec{r_s}, \vec{r}))$.

**4.** Procédé selon l'une quelconque des revendications 2 ou 3, **caractérisé en ce que** la cartographie spatiale tridimensionnelle de la variable d'atténuation $(k'_{fl}(r))$ à la longueur d'onde de fluorescence $(\lambda_{fl})$ est obtenue de manière analogue à la cartographie spatiale tridimensionnelle de la variable d'atténuation $(k'_{ex}(r))$ à la longueur d'onde d'excitation $(\lambda_{ex})$, en remplaçant l'éclairement de l'objet en lumière continue à la longueur d'onde d'excitation $(\lambda_{ex})$ par un éclairement de l'objet en lumière continue à la longueur d'onde de fluorescence $(\lambda_{fl})$.

**5.** Procédé selon l'une quelconque des revendications 1 à 3, **caractérisé en ce qu'**en chaque point du maillage, la variable d'atténuation $(k'_{fl}(r))$ à la longueur d'onde de fluorescence $(\lambda_{fl})$ est considérée comme identique à la variable d'atténuation $(k'_{ex}(r))$ à la longueur d'onde d'excitation $(\lambda_{ex})$.

**6.** Procédé selon l'une quelconque des revendications 1 à 3, **caractérisé en ce qu'**une variation des propriétés optiques de l'objet en fonction de la longueur d'onde étant connue, la variable d'atténuation $(k'_{fl}(r))$ à la longueur d'onde de fluorescence $(\lambda_{fl})$ est obtenue, en chaque point du maillage, par extrapolation de la variable d'atténuation $(k'_{ex}(r))$ à la longueur d'onde d'excitation $(\lambda_{ex})$.

**Patentansprüche**

**1.** Verfahren zur Rekonstruktion der Verteilung von Fluorophoren (f) in einem inhomogenen streuenden Objekt durch optische Tomographie, umfassend:

- die Beleuchtung des Objekts (1) mit kontinuierlichem Licht durch wenigstens eine Lichtquelle,
- die Messung der Lichtstärke $(\phi^m)$, die durch wenigstens einen Detektor bei einer Fluoreszenzwellenlänge empfangen wird,

- und die Auflösung, in jedem Punkt (r) eines Maschennetzes eines Volumens, welches das zu beobachtende Objekt wenigstens teilweise enthält, einer Gleichung, welche die Beziehung zwischen der gemessenen Lichtstärke ($\phi^m$), einem Parameter ($\vec{\beta r}_f$)), der für die Eigenschaften der Fluorophore (f) repräsentativ ist, und einer ersten und einer zweiten Übertragungsfunktion ($F(k_{ex}, \vec{r}_s, \vec{r}_f)$), ($F(k_{ex}, \vec{r}_s, \vec{r}_d)$), die für die Übertragung der Energie zwischen der Quelle (S) und einem Fluorophor (f) bzw. zwischen einem Fluorophor und einem Detektor (d) repräsentativ sind, ausdrückt, wobei die erste und die zweite Übertragungsfunktion von einer Wellenzahl ($k_{ex}$) bei der Erregungswellenlänge ($\lambda_{ex}$) bzw. von einer Wellenzahl ($k_{fl}$) bei der Fluoreszenzwellenlänge ($\lambda_{fl}$) abhängig sind,

wobei das Verfahren **dadurch gekennzeichnet ist, dass** es umfasst:

- eine Bestimmung einer dreidimensionalen Kartographie einer Dämpfungsvariablen ($k'_{ex}(r)$) bei der Erregungswellenlänge ($\lambda_{ex}$), die für die Inhomogenitäten von Streuung und Absorption des Objekts repräsentativ ist, wobei die Dämpfungsvariable von der Wellenzahl und von einer räumlichen Variation eines Streuungskoeffizienten in jedem Punkt des Maschennetzes abhängt;
- eine Bestimmung einer dreidimensionalen Kartographie der Dämpfungsvariablen ($k'_{fl}(r)$) bei der Fluoreszenzwellenlänge ($\lambda_{fl}$);
- die Rekonstruktion der Verteilung der Fluorophore unter Verwendung , in der ersten und der zweiten Übertragungsfunktion, der Dämpfungsvariablen ($k'_{ex}(r)$) bei der Erregungswellenlänge ($\lambda_{ex}$) bzw. der Dämpfungsvariablen ($k'_{fl}(r)$) bei der Fluoreszenzwellenlänge ($\lambda_{fl}$).

2. Verfahren nach Anspruch 1, **dadurch gekennzeichnet, dass** die Bestimmung der dreidimensionalen Kartographie der Dämpfungsvariablen bei der Erregungswellenlänge durch Rekonstruktion der dreidimensionalen räumlichen Kartographie der ersten Dämpfungsvariablen ($k'_{ex}(r)$) durchgeführt wird, wobei die Rekonstruktion durch die Beleuchtung des Objekts mit kontinuierlichem Licht bei der Erregungswellenlänge ($\lambda_{ex}$), und die experimentelle Messung einer Photonendichte durch den wenigstens einen Detektor und durch Auflösung einer Streuungsgleichung

$$\nabla F(\vec{r}_s, \vec{r}) - k'_{ex}(r)F(\vec{r}_s, \vec{r}) = A_S \delta(\vec{r} - \vec{r}_s)$$

erhalten wird, in welcher $A_s$ eine Konstante ist, $\vec{r}$ die räumliche Koordinate eines beliebigen Punktes des Maschennetzes ist und $\vec{r}_s$ die räumliche Koordinate der Lichtquelle (S) ist.

3. Verfahren nach Anspruch 2, wobei die Rekonstruktion durch sukzessive Iterationen unter Verwendung einer Konvergenzprüfung erhalten wird, die darauf gerichtet sind, eine Abweichung zwischen einer theoretischen Photonendichte ($F_{th}(\vec{r}_s, \vec{r})$), die durch Auflösung der Streuungsgleichung erhalten wird, und der gemessenen experimentellen Photonendichte ($F(\vec{r}_s, \vec{r})$) zu verringern.

4. Verfahren nach einem der Ansprüche 2 oder 3, **dadurch gekennzeichnet, dass** die dreidimensionale räumliche Kartographie der Dämpfungsvariablen ($k'_{fl}(r)$) bei der Fluoreszenzwellenlänge ($\lambda_{fl}$) auf analoge Weise wie die dreidimensionale räumliche Kartographie der Dämpfungsvariablen ($k'_{ex}(r)$) bei der Erregungswellenlänge ($\lambda_{ex}$) erhalten wird, indem die Beleuchtung des Objekts mit kontinuierlichem Licht bei der Erregungswellenlänge ($\lambda_{ex}$) durch eine Beleuchtung des Objekts mit kontinuierlichem Licht bei der Fluoreszenzwellenlänge ($\lambda_{fl}$) ersetzt wird.

5. Verfahren nach einem der Ansprüche 1 bis 3, **dadurch gekennzeichnet, dass** in jedem Punkt des Maschennetzes die Dämpfungsvariable ($k'_{fl}(r)$) bei der Fluoreszenzwellenlänge ($\lambda_{fl}$) als identisch mit der Dämpfungsvariablen ($k'_{ex}(r)$) bei der Erregungswellenlänge ($\lambda_{ex}$) betrachtet wird.

6. Verfahren nach einem der Ansprüche 1 bis 3, **dadurch gekennzeichnet, dass**, wenn eine Änderung der optischen Eigenschaften des Objekts in Abhängigkeit von der Wellenlänge bekannt ist, die Dämpfungsvariable ($k'_{fl}(r)$) bei der Fluoreszenzwellenlänge ($\lambda_{fl}$) in jedem Punkt des Maschennetzes durch Extrapolation der Dämpfungsvariablen ($k_{ex}(r)$) bei der Erregungswellenlänge ($\lambda_{ex}$) erhalten wird.

**Claims**

1. Method for reconstructing by optical tomography the distribution of fluorophores (f) in a nonuniform scattering object, including:

   - illuminating the object (1) in continuous light with at least one light source;
   - measuring the light intensity ($\phi^m$) received by at least one detector at a fluorescence wavelength;
   - and solving, at each point (r) of a mesh of a volume at least partially encompassing the object to be observed, an equation expressing the relationship between the measured light intensity ($\phi^m$), a parameter ($\beta(\vec{r_f})$) representative of the properties of the fluorophores (f) and first and second transfer functions ($F(k_{ex}, \vec{r_s}, \vec{r_f})$, $F(k_{ex}, \vec{r_s}, \vec{r_a})$) that are representative of the transfer of energy between the source (S) and a fluorophore (f), and between a fluorophore and a detector (d), respectively, the first and second transfer functions depending on a wave number ($k_{ex}$) at the excitation wavelength ($\lambda_{ex}$) and a wave number ($k_{fl}$) at the fluorescence wavelength ($\lambda_{fl}$), respectively,

   the method being **characterized in that** it includes:

   - determining, at the excitation wavelength ($\lambda_{ex}$), a three-dimensional map of an attenuation variable ($k'_{ex}(r)$) representative of absorption and scattering nonuniformities of the object, the attenuation variable being dependent on the wave number and a spatial variation in a scattering coefficient at each point of the mesh;
   - determining a three-dimensional map of the attenuation variable ($k'_{fl}(r)$) at the fluorescence wavelength ($\lambda_{fl}$); and
   - reconstructing the distribution of the fluorophores using, in said first and second transfer functions, the attenuation variable ($k'_{ex}(r)$) at the excitation wavelength ($\lambda_{ex}$) and the attenuation variable ($k'_{fl}(r)$) at the fluorescence wavelength ($\lambda_{fl}$), respectively.

2. Method according to Claim 1, **characterized in that** the three-dimensional map of the attenuation variable, at the excitation wavelength, is determined by reconstructing the three-dimensional spatial map of the first attenuation variable ($k'_{ex}(r)$), this reconstruction being obtained by illuminating the object in continuous light at the excitation wavelength ($\lambda_{ex}$) and measuring an experimental photon density with said at least one detector and by solving a scattering equation:

$$\nabla F(\vec{r_s}, \vec{r}) - k'_{ex}(r) F(\vec{r_s}, \vec{r}) = A_s \delta(\vec{r} - \vec{r_s}),$$

   in which As is a constant, $\vec{r}$ is the spatial coordinate of any given point of the mesh and $\vec{r_s}$ the spatial coordinate of the light source (S).

3. Method according to Claim 2, wherein the reconstruction is obtained, using a convergence test, by successive iterations tending to decrease a discrepancy between a theoretical photon density ($F_{th}(\vec{r_s}, \vec{r})$) obtained by solving said scattering equation and the measured experimental photon density ($F(\vec{r_s}, \vec{r})$).

4. Method according to either one of Claims 2 and 3, **characterized in that** the three-dimensional spatial map of the attenuation variable ($k'_{fl}(r)$) at the fluorescence wavelength ($\lambda_{fl}$) is obtained in an analogous way to the three-dimensional spatial map of the attenuation variable ($k'_{ex}(r)$) at the excitation wavelength ($\lambda_{ex}$), the illumination of the object in continuous light at the excitation wavelength ($\lambda_{ex}$) being replaced with illumination of the object in continuous light at the fluorescence wavelength ($\lambda_{fl}$).

5. Method according to any one of Claims 1 to 3, **characterized in that** at each point of the mesh, the attenuation variable ($k'_{fl}(r)$) at the fluorescence wavelength ($\lambda_{fl}$) is considered to be identical to the attenuation variable ($k'_{ex}(r)$) at the excitation wavelength ($\lambda_{ex}$).

6. Method according to any one of Claims 1 to 3, **characterized in that** a variation in the optical properties of the object as a function of wavelength being known, the attenuation variable ($k'_{fl}(r)$) at the fluorescence wavelength ($\lambda_{fl}$) is obtained, at each point of the mesh, by extrapolation of the attenuation variable ($k'_{ex}(r)$) at the excitation wavelength ($\lambda_{ex}$).

Figure 1 (art antérieur)

F1

Initialisation :
k'=k$_0$

F3

Eclairement à λex
et
mesure de F$_{exp}$ à λex

F2

Détermination de F$_{th}$
(équation 9)

F5

Correction de
k'

F4

Test de
convergence :
$\left\| F_{th} - F_{exp} \right\| < \varepsilon$

Non

Oui

Figure 2

Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE V. NTZIACHRISTOS et al.** Expérimental three-dimensional fluorescence reconstruction of diffuse média by use of a normalized Born approximation. *Optics Letters,* 2001, vol. 26 (12

- **DE R. ROY et al.** Fluorescence-Enhanced Optical Tomography Using Referenced Measurements of Heterogeneous Media. *IEEE Transactions on Medical Imaging,* 2003, vol. 22 (7